# EUROPÄISCHE PATENTSCHRIFT

(11) **EP 3 828 039 B1**
(45) Veröffentlichungstag und Bekanntmachung des Hinweises auf die Patenterteilung: **26.07.2023**
(21) Anmeldenummer: 20209569.1
(22) Anmeldetag: 24.11.2020
(51) Int. Cl.: F16B 21/02, B60R 19/02, B60R 19/52, F16B 5/02, F16B 37/08

(54) **TRÄGERVORRICHTUNG FÜR EIN AUSSENVERKLEIDUNGSTEIL EINES KRAFTFAHRZEUGS**
SUPPORT DEVICE FOR AN EXTERNAL CLADDING SECTION OF A MOTOR VEHICLE
DISPOSITIF DE SUPPORT POUR UNE PIÈCE DE REVÊTEMENT EXTÉRIEUR D'UN VÉHICULE AUTOMOBILE

(30) Priorität: 29.11.2019 DE 202019106653 U
(43) Veröffentlichungstag der Anmeldung: 02.06.2021
(73) Patentinhaber: REHAU Automotive SE & Co. KG, 95111 Rehau (DE); Skoda Auto a.s., 29301 Mladá Boleslav (CZ)
(72) Erfinder: Kryspín, Radek, 14900 Prag 4 (CZ); Peller, David, 95163 Weißenstadt (DE); Svárovský, Milan, 29441 Dobrovice (CZ); Svozil, Jakub, 25228 Cernosice (CZ); Tuchbreiter, Tobias, 95482 Gefrees (DE)

(56) Entgegenhaltungen:
- EP-A1- 3 254 951
- EP-B1- 2 530 336
- DE-A1- 19 527 738
- DE-A1-102012 011 848
- DE-U1-202010 003 368
- DE-U1-202012 103 704

## Beschreibung

Die vorliegende Erfindung betrifft eine Trägervorrichtung für ein Außenverkleidungsteil eines Kraftfahrzeugs. Des Weiteren betrifft die Erfindung noch eine Frontend-Baugruppe für ein Kraftfahrzeug, welche eine derartige Trägervorrichtung aufweist.

Bei Kraftfahrzeugen werden oftmals verschiedene Außenverkleidungsteile verbaut. Beim Verbauen beziehungsweise Montieren solcher Außenverkleidungsteile ist es meistens wünschenswert, dass die Außenverkleidungsteile möglichst passgenau zu umliegenden Bauteilen angeordnet und fixiert werden können. Die EP 2 530 336 B1 zeigt eine Vorrichtung zum Abstützen von Bauteilen. Konkret wird eine Abstützvorrichtung für einen Kühlergrill beschrieben, der gegenüber einem Stoßfängerquerträger abgestützt und positioniert werden kann. Ein Verstellbolzen kann in ein Aufnahmeelement eingeführt werden, wobei durch Eindrehen einer Fixierschraube der Verstellbolzen gespreizt und dadurch fixiert werden kann. Einerseits kann dadurch der Kühlergrill gegenüber dem Stoßfängerquerträger abgestützt werden, andererseits soll es dadurch gelingen, ein Absetzen beziehungsweise Absinken des Kühlergrills gegenüber einem darüber angeordneten Kühlerschutzgitter zu verhindern. Das Dokument DE102012011848 A1 zeigt eine Trägervorrichtung nach dem Oberbegriff des Anspruchs 1.

Es ist die Aufgabe der vorliegenden Erfindung, eine Lösung bereitzustellen, mittels welcher ein Außenverkleidungsteil besonders einfach und passgenau gegenüber zumindest einem weiteren Fahrzeugbauteil positioniert und fixiert werden kann.

Diese Aufgabe wird durch eine Trägervorrichtung für ein Außenverkleidungsteil eines Kraftfahrzeugs mit den Merkmalen des Anspruchs 1 gelöst. Weitere mögliche Ausgestaltungen der Erfindung sind insbesondere in den abhängigen Ansprüchen angegeben.

Die erfindungsgemäße Trägervorrichtung für ein Außenverkleidungsteil eines Kraftfahrzeugs umfasst einen Träger zum Aufnehmen des Außenverkleidungsteils, der wenigstens einen in vertikaler Richtung verlaufenden Aufnahmeschacht mit einer Innenverzahnung aufweist. Bei dem Außenverkleidungsteil kann es sich beispielsweise um einen Kühlergrill handeln, wobei in dem Fall der Träger entsprechend dazu ausgelegt ist, den Kühlergrill aufzunehmen. Bei dem Außenverkleidungsteil kann es sich aber auch um beliebige andere Au-ßenverkleidungsteile für Kraftfahrzeuge handeln, wobei der Träger je nach Geometrie und weiteren Eigenschaften des Außenverkleidungsteils an dieses angepasst ist, sodass dieses mittels des Trägers aufgenommen werden kann.

Die Trägervorrichtung umfasst wenigstens einen in den Aufnahmeschacht einsetzbaren Stützfinger, der an seiner Mantelfläche eine Außenverzahnung und an einem unteren Längsende einen stirnseitigen Abstützbereich zum Abstützen des Stützfingers in vertikaler Richtung auf einem Abstützteil des Kraftfahrzeugs aufweist. Der Stützfinger ist dabei relativ zum Aufnahmeschacht um seine Längsachse zwischen einer Freigabestellung und einer Fixierstellung verdrehbar. In der Freigabestellung stehen die Außenverzahnung des Stützfingers und die Innenverzahnung des Aufnahmeschachts nicht in Eingriff, sodass der Stützfinger in seiner Freigabestellung in vertikaler Richtung relativ zum Aufnahmeschacht bewegt werden kann. In der Fixierstellung hingegen sind die Außenverzahnung des Stützfingers und die Innenverzahnung des Aufnahmeschachts in Eingriff, sodass eine Bewegung des Stützfingers in vertikaler Richtung relativ zum Aufnahmeschacht dadurch gesperrt beziehungsweise verhindert wird.

Zur Montage des Außenverkleidungsteils am restlichen Kraftfahrzeug ist es also lediglich erforderlich, zunächst das Außenverkleidungsteil am Träger anzuordnen. Der Stützfinger kann in den Aufnahmeschacht in vertikaler Richtung eingesetzt beziehungsweise eingeführt werden. Durch Verdrehung des Stützfingers relativ zum Aufnahmeschacht um seine Längsachse in die Freigabestellung können der Stützfinger und der Aufnahmeschacht so zueinander positioniert werden, dass die Außenverzahnung des Stützfingers nicht in Eingriff mit der Innenverzahnung des Aufnahmeschachts gelangt. In dieser Freigabestellung kann der Stützfinger dann ganz einfach und vor allem besonders schnell in vertikaler Richtung relativ zum Aufnahmeschacht bewegt werden. Der Stützfinger kann dabei so weit in vertikaler Richtung innerhalb des Aufnahmeschachts abgesenkt werden, bis der Stützfinger mit seinem stirnseitigen Abstützbereich an seinem unteren Längsende in Anlage mit dem besagten Abstützteil des Kraftfahrzeugs gelangt. Danach muss der Stützfinger einfach nur von seiner Freigabestellung in die Fixierstellung verdreht werden, in Folge dessen die Außenverzahnung des Stützfingers in Eingriff mit der Innenverzahnung des Aufnahmeschachts gelangt. In dieser Fixierstellung ist dann keine vertikale Relativbewegung mehr zwischen dem Stützfinger und dem Aufnahmeschacht, somit auch nicht zum Träger möglich. Da das Außenverkleidungsteil am Träger befestigt sein kann, kann somit das Außenverkleidungsteil auch nicht mehr zu umliegenden Bauteilen des Kraftfahrzeugs in vertikaler Richtung verstellt beziehungsweise verschoben werden, sobald die Fixierstellung des Stützfingers eingenommen worden ist.

Der Träger stützt sich unter Vermittlung des in der Fixierstellung angeordneten Stützfingers am besagten Abstützteil des Kraftfahrzeugs ab. Auch bei verschiedensten im Fahrgebrauch des Kraftfahrzeugs auftretenden Belastungen kann mittels der erfindungsgemäßen Trägervorrichtung auf einfache Weise sichergestellt werden, dass der Träger und somit das mittels des Trägers aufgenommene Außenverkleidungsteil sich nicht in vertikaler Richtung zu umliegenden Bauteilen des Kraftfahrzeugs, wie beispielsweise weiteren Außenverkleidungsteilen, Stoßfängern und dergleichen, verschieben kann. Gleichzeitig ist es mittels der erfindungsgemäßen Trägervorrichtung möglich, den Stützfinger besonders einfach und schnell in vertikaler Richtung relativ zum Aufnahmeschacht zu bewegen, solange der Stützfinger in seiner Freigabestellung angeordnet ist. Dadurch ergibt sich eine besonders einfache und schnelle Montagemöglichkeit der gesamten Trägervorrichtung mitsamt dem Außenverkleidungsteil an der entsprechenden Stelle des Kraftfahrzeugs. Sobald der stirnseitige Abstützbereich am unteren Längsende des Stützfingers in Anlage mit dem Abstützteil des Kraftfahrzeugs gelangt ist, muss der Stützfinger einfach nur um seine Längsachse verdreht werden, und zwar so weit, bis der Stützfinger seine Fixierstellung eingenommen hat. Sobald dies geschehen ist, wird die Trägervorrichtung mitsamt dem daran befestigten Außenverkleidungsteil zuverlässig und dauerhaft gegen Bewegungen beziehungsweise Relativbewegungen zu umliegenden Bauteilen des Kraftfahrzeugs abgesichert.

Eine mögliche Ausgestaltung der Erfindung sieht vor, dass die Außenverzahnung des Stützfingers an zwei gegenüberliegenden Längsseiten ausgebildet und durch zwei gegenüberliegende Längsseiten ohne Außenverzahnung unterbrochen ist, wobei die Innenverzahnung im Aufnahmeschacht des Trägers an zwei gegenüberliegenden Längsseiten ausgebildet und durch zwei gegenüberliegende Längsseiten ohne Innenverzahnung unterbrochen ist. Sind also die jeweiligen Längsseiten ohne Außenverzahnung beziehungsweise Innenverzahnung gegenüberliegend zueinander angeordnet, so nimmt der Stützfinger seine Freigabestellung ein. In dieser Freigabestellung kann der Stützfinger ganz einfach in vertikaler Richtung relativ zum Aufnahmeschacht bewegt werden. Soll die Fixierstellung des Stützfingers eingenommen werden, so müssen einfach nur die jeweiligen an den gegenüberliegenden Längsseiten ausgebildeten Verzahnungen des Stützfingers und des Aufnahmeschachts miteinander in Eingriff gebracht werden. Durch diese Gestaltung beziehungsweise Anordnung der jeweiligen Verzahnungen ist es auf besonders einfache Weise möglich, den Stützfinger zwischen seiner Freigabestellung und Fixierstellung zu verdrehen.

Eine weitere mögliche Ausgestaltung der Erfindung sieht vor, dass die Außenverzahnung und die Innenverzahnung jeweils als Schrägverzahnung ausgebildet sind, sodass beim aneinander Abgleiten der Außenverzahnung an der Innenverzahnung der Stützfinger in vertikaler Richtung bewegt wird. Die Außenverzahnung und die Innenverzahnung bilden mit anderen Worten also eine Art umlaufendes Außengewinde beziehungsweise Innengewinde, welche in Umfangsrichtung jeweils unterbrochen sind. Durch besagte Schrägverzahnung der Außenverzahnung und der Innenverzahnung ist es auf einfache Weise möglich, den Stützfinger in vertikaler Richtung relativ zum Aufnahmeschacht zu bewegen, indem einfach die beiden Verzahnungen in Eingriff gebracht und der Stützfinger um seine Längsachse verdreht wird. Insbesondere ist es dadurch auch möglich, den sich auf dem Abstützteil des Kraftfahrzeugs abstützenden Stützfinger gegenüber dem Träger leicht zu verspannen. So ist es möglich, das am Träger angebrachte Außenverkleidungsteil besonders spielfrei mit gewünschtem Abstand zu umliegenden Komponenten des Kraftfahrzeugs anzuordnen und zu fixieren.

Gemäß der Erfindung ist es vorgesehen, dass der Träger eine Verdrehsicherung aufweist, die dazu ausgelegt ist, den Stützfinger in der Fixierstellung zu halten. Wurde unter Vermittlung der Trägervorrichtung das betreffende Außenverkleidungsteil also in seiner wunschgemäßen beziehungsweise bestimmungsgemäßen Anordnung gegenüber restlichen Komponenten des Kraftfahrzeugs angeordnet, montiert und fixiert, so ist es mittels der Verdrehsicherung auf einfache Weise möglich, den Stützfinger in seiner Fixierstellung zu halten beziehungsweise zu fixieren. Nach erfolgter Anordnung und Montage des Außenverkleidungsteils kann so auf einfache Weise sichergestellt werden, dass das Außenverkleidungsteil insbesondere in Hochrichtung des Kraftfahrzeugs nicht mehr gegenüber anderen Komponenten des Kraftfahrzeugs verstellt werden kann. Dadurch können beispielsweise vorgegebene Spaltmaße zwischen dem Außenverkleidungsteil und anderen Verkleidungsteilen oder anderweitigen Bauteilen des Kraftfahrzeugs dauerhaft und zuverlässig eingehalten werden.

Die Verdrehsicherung weist einen biegsamen Sicherungsarm mit einer Aussparung auf, wobei der Stützfinger wenigstens einen radialen Vorsprung aufweist. Durch Verdrehen des Stützfingers von der Freigabestellung in die Fixierstellung biegt der radiale Vorsprung am Stützfinger zunächst den Sicherungsarm weg, wobei mit Erreichen der Fixierstellung unter Zurückschnappen des Sicherungsarms der radiale Vorsprung des Stützfingers in die Aussparung gelangt. Durch elastisches Wegbiegen und elastisches Zurückschnappen des biegsamen Sicherungsarms ist es also auf einfache Weise möglich, den Stützfinger zunächst in die Fixierstellung zu verdrehen und danach in dieser zu halten. Beim Verdrehen des Stützfingers von seiner Freigabestellung in die Fixierstellung gelangt der radiale Vorsprung in Anlage mit dem biegsamen Sicherungsarm und drückt diesen weg. Mit weiterer Verdrehung des Stützfingers gelangt dann der radiale Vorsprung in besagte Aussparung des biegsamen Sicherungsarms, in Folge dessen der biegsame Sicherungsarm wieder entgegengesetzt zur vorher durchgeführten beziehungsweise erzwungenen Biegerichtung zurückschnappt. Die Aussparung am Sicherungsarm kann insbesondere passend zur Form und Größe des radialen Vorsprungs ausgebildet sein, sodass ein Formschluss nach dem Zurückschnappen des biegsamen Sicherungsarms zwischen der Aussparung und dem radialen Vorsprung besteht. Dadurch kann der Stützfinger in seiner Fixierstellung besonders zuverlässig gehalten beziehungsweise fixiert werden.

Gemäß einer weiteren möglichen Ausgestaltung der Erfindung ist es vorgesehen, dass der Stützfinger zwei der radialen Vorsprünge aufweist, die an gegenüberliegenden Seiten des Stützfingers angeordnet sind. Dadurch ergibt sich eine besonders einfache Montage des Stützfingers, da diese aufgrund der beiden radialen Vorsprünge in unterschiedlichen Stellungen beziehungsweise Verdrehstellungen in den Aufnahmeschacht eingesetzt werden kann. Der Stützfinger muss von seiner Freigabestellung nicht allzu weit verdreht werden, um seine Fixierstellung einzunehmen, in welcher die Verdrehsicherung eine Verdrehung des Stützfingers aus der Fixierstellung heraus unterbindet.

Eine weitere mögliche Ausgestaltung der Erfindung sieht vor, dass die Trägervorrichtung eine Transportsicherung aufweist, welche dazu ausgelegt ist, den in den Aufnahmeschacht eingesetzten Stützfinger am Träger zu fixieren. Die gesamte Trägervorrichtung kann also als bereits fertig zusammengesetzte Baugruppe problemlos transportiert werden, da die Transportsicherung zuverlässig dafür sorgt, dass der in den Aufnahmeschacht eingesetzte Stützfinger am Träger und insbesondere innerhalb des Aufnahmeschachts fixiert bleibt.

Gemäß einer weiteren möglichen Ausgestaltung der Erfindung ist es vorgesehen, dass die Transportsicherung eine Schnappverbindung aufweist, welche dazu ausgelegt ist, den in den Aufnahmeschacht eingesetzten Stützfinger am Träger zu fixieren. Die Schnappverbindung ist insbesondere dazu ausgelegt, den in den Aufnahmeschacht eingesetzten Stützfinger wieder lösbar am Träger zu fixieren. Mittels der Schnappverbindung wird eine besonders einfache und zuverlässige Lösung bereitgestellt, den in den Aufnahmeschacht eingesetzten Stützfinger am Träger zu fixieren, sodass durch die Transportsicherung eine zuverlässige Verliersicherung für den in den Aufnahmeschacht eingesetzten Stützfinger bereitgestellt wird. Zum Beispiel kann der Stützfinger eine radiale Vertiefung beziehungsweise Mulde aufweisen, in welche ein in den Aufnahmeschacht in radialer Richtung ragender Vorsprung formschlüssig einrastet, wenn die Vertiefung beziehungsweise Mulde auf Höhe des Vorsprungs positioniert worden ist. Der Vorsprung selbst kann beispielsweise an einem biegsamen Element angeordnet sein, welches ein Teil des Trägers sein kann. Wird der Stützfinger also weit genug in den Aufnahmeschacht hineinbewegt, schnappt der radiale Vorsprung in die Vertiefung beziehungsweise Mulde ein, in Folge dessen beispielsweise ein Formschluss zwischen der Vertiefung und dem Vorsprung realisiert werden kann. Dadurch kann der in den Aufnahmeschacht eingesetzte Stützfinger ganz einfach und verliersicher am Träger innerhalb des Aufnahmeschachts fixiert bleiben. Statt einer Schnappverbindung können auch andere Möglichkeiten vorgesehen sein, die Transportsicherung umzusetzen. Beispielsweise ist es möglich, dass durch Verdrehen des Stützfingers relativ zum Aufnahmeschacht eine Bohrung im Stützfinger fluchtend zu einer Öse des Trägers positionierbar ist, wobei die Transportsicherung ein Sicherungselement aufweisen kann, beispielsweise in Form eines Bolzens oder dergleichen, das in die Bohrung und in die Öse hineinbewegbar ist. Auf diese Weise ist es auch möglich, den Stützfinger verliersicher im Aufnahmeschacht und somit am Träger zu fixieren.

Eine weitere mögliche Ausgestaltung der Erfindung sieht vor, dass der Träger einen weiteren in vertikaler Richtung verlaufenden Aufnahmeschacht mit einer Innenverzahnung und einen weiteren in diesen Aufnahmeschacht einsetzbaren Stützfinger aufweist, der an seiner Mantelfläche eine Außenverzahnung und an einem unteren Längsende einen stirnseitigen Abstützbereich zum Abstützen des Stützfingers in vertikaler Richtung auf dem Abstützteil oder einem weiteren Abstützteil des Kraftfahrzeugs aufweist. Der weitere Stützfinger ist relativ zum weiteren Aufnahmeschacht um seine Längsachse zwischen einer Freigabestellung und einer Fixierstellung verdrehbar. In der Freigabestellung stehen wiederum die Au-ßenverzahnung und die Innenverzahnung der betreffenden Elemente nicht in Eingriff, sodass der weitere Stützfinger in vertikaler Richtung relativ zum weiteren Aufnahmeschacht bewegbar ist. In der Fixierstellung stehen die Außenverzahnung und die Innenverzahnung der betreffenden Elemente wiederum in Eingriff, sodass eine Bewegung des weiteren Stützfingers in vertikaler Richtung relativ zum weiteren Aufnahmeschacht gesperrt wird. Dient die Trägervorrichtung beispielsweise dazu, relativ schwere Komponenten aufzunehmen, so kann es vorteilhaft sein, wenn der Träger zwei oder auch mehr der Aufnahmeschächte sowie Stützfinger aufweist. Dadurch kann der Träger besonders zuverlässig unter Vermittlung der Stützfingers gegenüber dem restlichen Kraftfahrzeug abgestützt werden, ohne dass das mittels der Trägervorrichtung gehaltene Außenverkleidungsteil in vertikaler Richtung absackt.

Die erfindungsgemäße Frontend-Baugruppe für ein Kraftfahrzeug umfasst ein Außenverkleidungsteil, einen Stoßfänger, an dem ein Abstützteil angeordnet ist, und die erfindungsgemäße Trägervorrichtung oder eine mögliche Ausgestaltung der erfindungsgemäßen Trägervorrichtung, deren Träger dazu ausgelegt ist, das Außenverkleidungsteil aufzunehmen, und deren Stützfinger dazu ausgelegt ist, sich mit seinem stirnseitigen Abstützbereich in vertikaler Richtung auf dem Abstützteil abzustützen. Wie bereits erwähnt, kann es sich bei dem Außenverkleidungsteil beispielsweise um einen Kühlergrill handeln. Es ist aber auch möglich, dass es sich bei dem Außenverkleidungsteil um beliebige andere Komponenten beziehungsweise Außenverkleidungsteile handelt.

Weitere Merkmale der Erfindung können sich aus der nachfolgenden Figurenbeschreibung sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine Perspektivansicht einer Trägervorrichtung für ein Außenverkleidungsteil eines Kraftfahrzeugs;
- Fig. 2: eine perspektivische Detailansicht der Trägervorrichtung, wobei ein in einen Aufnahmeschacht eines Trägers der Trägervorrichtung eingesetzter Stützfinger zu erkennen ist, der sich in vertikaler Richtung auf einem Abstützteil abstützt;
- Fig. 3: eine Perspektivansicht des Stützfingers, der an gegenüberliegenden Längsseiten jeweilige Außenverzahnungen aufweist;
- Fig. 4: eine Seitenansicht des Stützfingers;
- Fig. 5: eine Seitenschnittansicht des Trägers der Trägervorrichtung, wobei der Träger einen Aufnahmeschacht für den Stützfinger aufweist, der an verschiedenen Stellen eine Innenverzahnung aufweist;
- Fig. 6: eine Frontalansicht von einem Ausschnitt des Trägers im Bereich des Aufnahmeschachts;
- Fig. 7: eine weitere Seitenschnittansicht des Trägers im Bereich des Aufnahmeschachts, wobei der Stützfinger in den Aufnahmeschacht eingesetzt worden ist;
- Fig. 8: eine Draufsicht auf die Trägervorrichtung, wobei eine biegsame Verdrehsicherung zu erkennen ist, wobei sich der Stützfinger in einer Freigabestellung befindet, in welcher die Verdrehsicherung den Stützfinger nicht an seiner Verdrehung hindert;
- Fig. 9: eine weitere Draufsicht auf die Trägervorrichtung, wobei die Verdrehsicherung mit dem Stützfinger verrastet ist und diesen in seiner Fixierstellung festhält.

In den Figuren sind gleiche oder funktionsgleiche Elemente mit den gleichen Bezugszeichen versehen.

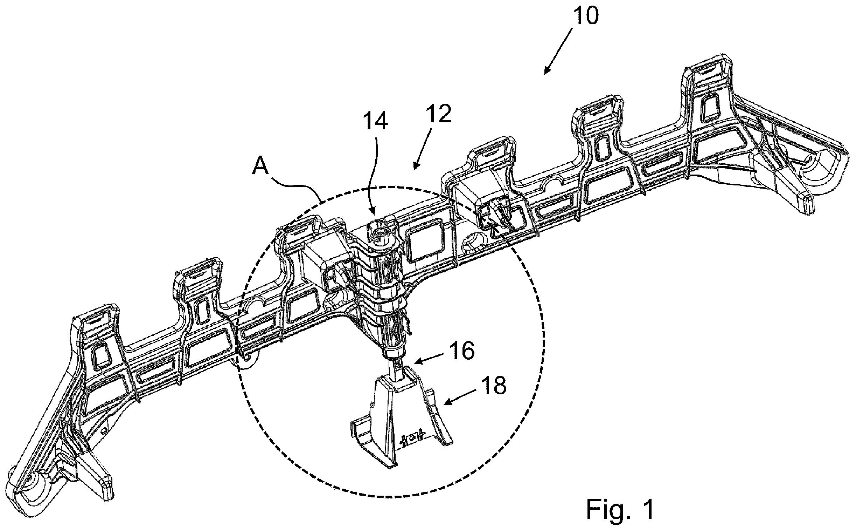

Eine Trägervorrichtung 10 für ein Außenverkleidungsteil eines Kraftfahrzeugs ist in einer Perspektivansicht in Fig. 1 gezeigt. Das Außenverkleidungsteil selbst ist vorliegend nicht dargestellt. Bei dem Außenverkleidungsteil kann es sich beispielsweise um einen Kühlergrill oder auch um ein anderes Außenverkleidungsteil für ein Kraftfahrzeug handeln, welches mittels der Trägervorrichtung 10 aufgenommen werden kann. Die Trägervorrichtung 10 umfasst einen Träger 12 zum Aufnehmen des Außenverkleidungsteils. Des Weiteren umfasst die Trägervorrichtung 10 einen Stützfinger 14, der in vertikaler Richtung in den Träger 12 eingesetzt werden kann. Im Bereich eines unteren Längsendes 16 umfasst der Stützfinger 14 einen nicht näher bezeichneten stirnseitigen Abstützbereich zum Abstützen des Stützfingers 14 in vertikaler Richtung auf einem Abstützteil 18 des betreffenden Kraftfahrzeugs. Das Abstützteil 18 ist also nicht Teil der Trägervorrichtung 10.

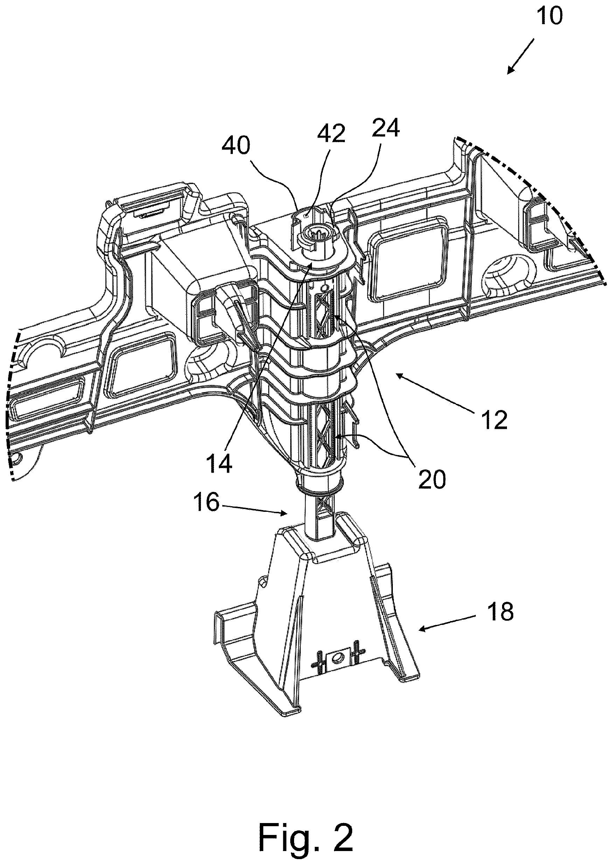

In Fig. 2 ist der in Fig. 1 gekennzeichnete Bereich Ader Trägervorrichtung 10 in einer perspektivischen Detailansicht gezeigt. Vorliegend ist wiederum der Stützfinger 14 in den Träger 12 eingesetzt, und zwar in einen hier noch nicht näher bezeichneten Aufnahmeschacht, welcher in vertikaler Richtung verläuft. Der Stützfinger 14 weist an seiner nicht näher bezeichneten Mantelfläche eine Außenverzahnung 20 auf.

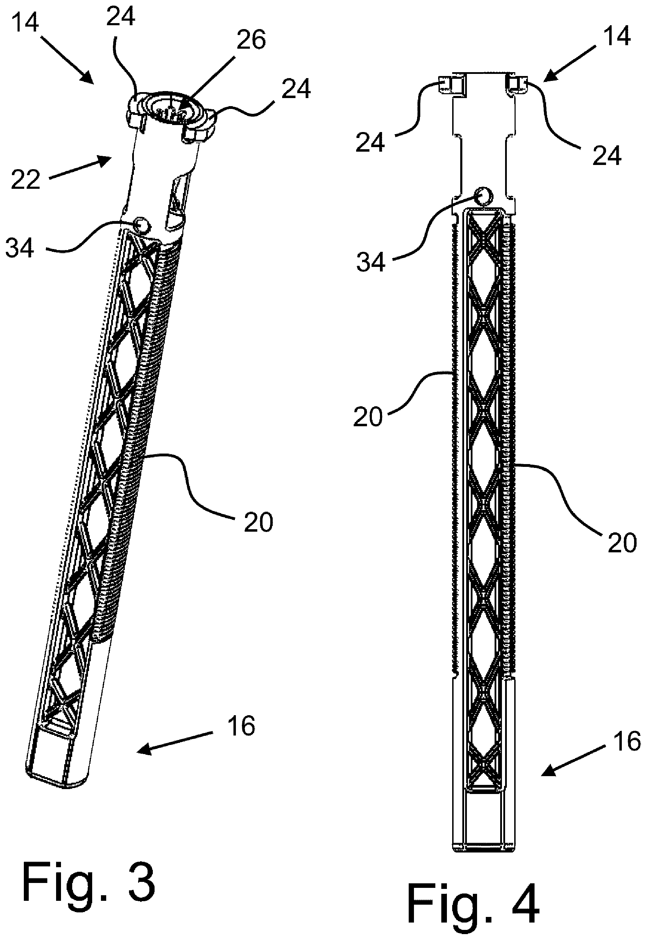

In Fig. 3 ist der Stützfinger 14 in einer Perspektivansicht gezeigt. Vorliegend kann man einen Teil der Außenverzahnung 20 gut erkennen. Die Außenverzahnung 20 des Stützfingers 14 ist an zwei gegenüberliegenden Längsseiten ausgebildet und durch zwei gegenüberliegende Längsseiten ohne Außenverzahnung unterbrochen.

In Fig. 4 ist der Stützfinger 14 in einer Seitansicht gezeigt. In dieser Ansicht kann man gut erkennen, dass die Außenverzahnung 20 an besagten gegenüberliegenden Längsseiten ausgebildet und durch die anderen gegenüberliegenden Längsseiten ohne Außenverzahnung unterbrochen ist. Die Längsseiten mit der Außenverzahnung 20 bilden jeweilige Abschnitte einer Mantelfläche des Stützfingers 14, sind also bezogen auf den Querschnitt des Stützfingers 14 eine Art Kreissegment. Die Längsseiten, die ohne die Außenverzahnung 20 ausgebildet sind, sind vorliegend eben und somit nicht gekrümmt.

Im Bereich eines oberen Längsendes 22 weist der Stützfinger 14 zwei radiale Vorsprünge 24 auf, welche an gegenüberliegenden Seiten angeordnet sind. Zudem weist der Stützfinger 14 im Bereich seines oberen Längsendes 22 stirnseitig eine Vertiefung 26 auf, in welche ein Werkzeug eingesetzt werden kann, um den Stützfinger 14 um seine Längsachse zu verdrehen. Die Vertiefung 26 kann unterschiedlichste Formen aufweisen, je nach Werkzeug, mittels welchem der Stützfinger 14 verdreht werden soll.

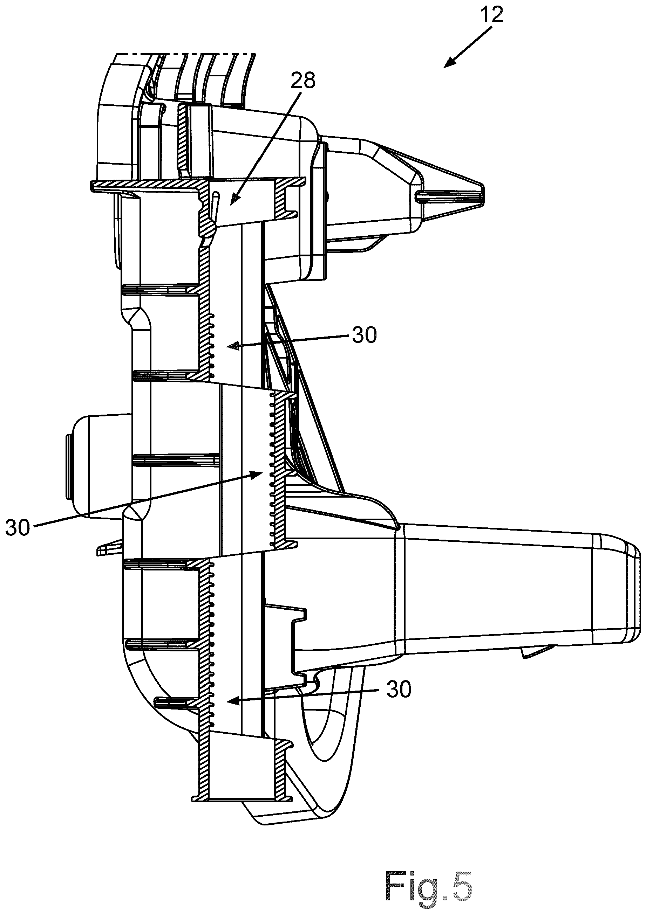

In Fig. 5 ist der Träger 12 in einer Seitenschnittansicht gezeigt. Vorliegend kann man den bereits erwähnten Aufnahmeschacht 28 erkennen, der nun mit dem Bezugszeichen 28 versehen wurde. Hier kann man nochmal gut erkennen, dass der Aufnahmeschacht 28 sich in vertikaler Richtung erstreckt. Der Aufnahmeschacht 28 weist an unterschiedlichen Stellen eine Innenverzahnung 30 auf. Der hier nicht dargestellte Stützfinger 14 kann von oben in den Aufnahmeschacht 28 eingeführt werden. Der Stützfinger 14 kann dabei relativ zum Aufnahmeschacht 28 um seine Längsachse zwischen einer Freigabestellung und einer Fixierstellung verdreht werden. In der Freigabestellung stehen die mit der Außenverzahnung 20 versehenden Bereiche des Stützfingers 14 und die mit der Innenverzahnung 30 versehenden Bereiche des Aufnahmeschachts 28 nicht Eingriff, sodass der Stützfinger 14 in vertikaler Richtung relativ zum Aufnahmeschacht 28 bewegt werden kann. In der Fixierstellung des Stützfingers 14 stehen die Außenverzahnung 20 des Stützfingers 14 und die Innenverzahnung 30 des Aufnahmeschachts 28 in Eingriff, sodass eine Bewegung des Stützfingers 14 in vertikaler Richtung relativ zum Aufnahmeschacht 28 gesperrt beziehungsweise verhindert wird.

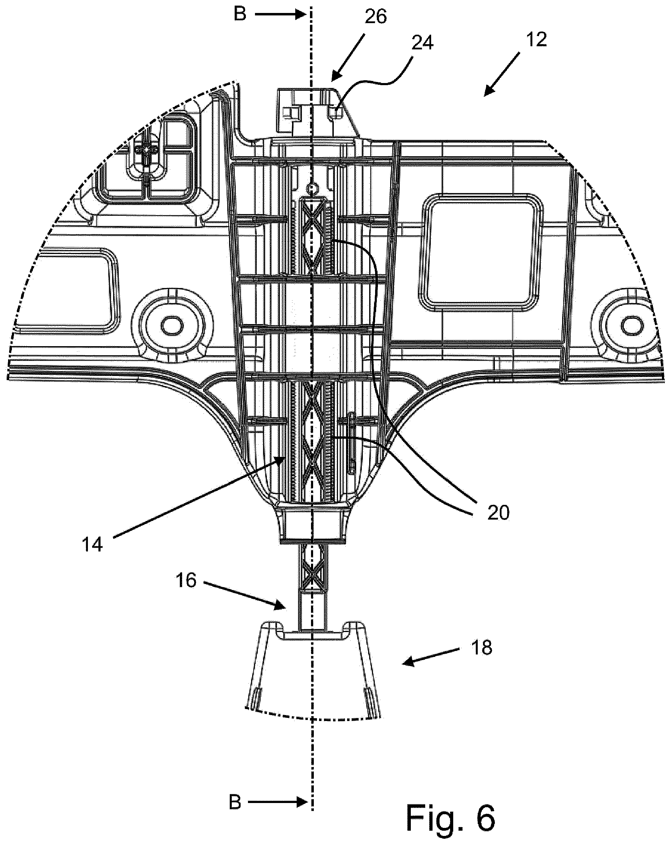

In Fig. 6 ist der Träger 12 in einer Frontalansicht im Bereich des hier nicht näher gekennzeichneten Aufnahmeschachts 28 dargestellt. Der Stützfinger 14 wurde in den Aufnahmeschacht 28 des Trägers 12 von oben eingeführt. Vorliegend befindet sich der Stützfinger 14 in der besagten Fixierstellung, was daran zu erkennen ist, dass die Bereiche mit der Au-ßenverzahnung 20 des Stützfingers 14 so angeordnet sind, dass sie gegenüberliegend von den hier nicht erkennbaren Bereichen mit der Innenverzahnung 30 des Trägers 12 angeordnet sind.

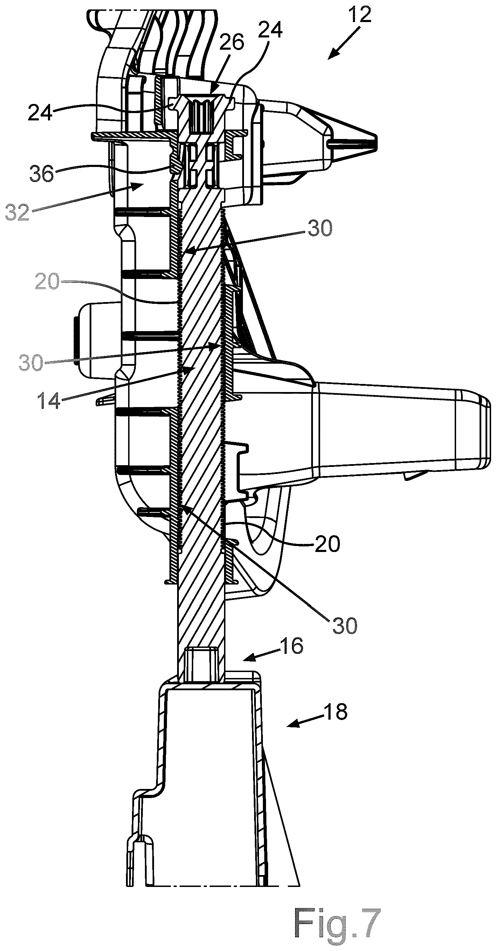

In Fig. 7 ist der Träger 12 mitsamt dem eingesetzten Stützfinger 14 entlang der in Fig. 6 gekennzeichneten Schnittebene B-B dargestellt. Der in den Aufnahmeschacht 28 eingesetzte Stützfinger 14 befindet sich wiederum in seiner Fixierstellung, was vorliegend nochmals gut daran zu erkennen ist, dass die Außenverzahnung 20 des Stützfingers 14 in Eingriff mit der Innenverzahnung 30 des Aufnahmeschachts 28 steht. Zum Montieren des am Träger 12 angeordneten und hier nicht dargestellten Außenverkleidungsteils, beispielsweise in Form eines Kühlergrills, wird der Stützfinger 14 zunächst in seiner Freigabestellung angeordnet, in welcher die Außenverzahnung 20 und die Innenverzahnung 30 nicht miteinander in Eingriff stehen, also die jeweiligen Verzahnungen 20, 30 nicht gegenüberliegend voneinander angeordnet sind. In dieser Freigabestellung kann der Stützfinger 14 ganz einfach in vertikaler Richtung relativ zum Aufnahmeschacht 28 bewegt werden. Der Stützfinger 14 kann in seiner Freigabestellung also zumindest im Wesentlichen widerstandsfrei in vertikaler Richtung im Aufnahmeschacht 28 nach unten bewegt werden, und zwar so weit, bis der stirnseitige Abstützbereich am unteren Längsende 16 des Stützfingers 14 in Anlage mit dem Abstützteil 18 gelangt ist.

Danach wird der Stützfinger 14 um seine Längsachse verdreht, und zwar so weit, bis der Stützfinger 14 seine hier gezeigte Fixierstellung erreicht hat, in welcher die Außenverzahnung 20 des Stützfingers 14 und die Innenverzahnung 30 im Aufnahmeschacht 28 gegenüberliegend voneinander angeordnet sind. Die Außenverzahnung 20 und die Innenverzahnung 30 können in Form von jeweiligen Schrägverzahnungen ausgebildet sein. Mit anderen Worten können die Außenverzahnung 20 und die Innenverzahnung 30 jeweils in Form von Gewindeabschnitten ausgebildet sein, die in Umfangsrichtung unterbrochen sind. Beim Verdrehen des Stützfingers 14 innerhalb des Aufnahmeschachts 28 gelangen also die jeweiligen Verzahnungen 20, 30 irgendwann in Eingriff, wobei durch die Schrägverzahnung der Stützfinger 14 beim Ineinandergreifen der jeweiligen Verzahnungen 20, 30 in vertikaler Richtung bewegt wird.

Noch vor dem Montieren des Außenverkleidungsteils kann der Stützfinger 14 bereits in den Aufnahmeschacht 28 eingesetzt werden. Die Trägervorrichtung 10 kann eine Transportsicherung 32 aufweisen, die dazu ausgelegt ist, den in den Aufnahmeschacht 28 eingesetzten Stützfinger 14 am Träger 12 zu fixieren. Insbesondere kann die Transportsicherung 32 eine Schnappverbindung aufweisen, welche dazu ausgelegt ist, den in den Aufnahmeschacht 28 eingesetzten Stützfinger 14 am Träger 12 und somit innerhalb des Aufnahmeschachts 28 zu fixieren.

Der Stützfinger 14 weist oberhalb von seiner Außenverzahnung 20 (siehe Figuren 3 und 4) im Bereich der Längsseiten, an denen die Außenverzahnung 20 ausgespart ist, muldenförmige Vertiefungen 34 auf. Der Träger 12 weist in einem oberen Bereich einen Vorsprung 36 auf, der von seiner Formgebung her an die muldenförmigen Vertiefungen 34 angepasst ist. Der Vorsprung 36 ist wie eine Art eingespannter Balken gelagert. Wird der Stützfinger 14 nun in den Aufnahmeschacht 28 eingeführt, und zwar so, dass eine der muldenförmigen Vertiefungen 34 dem in den Aufnahmeschacht 28 ragenden Vorsprung 36 zugewandt ist, wird beim Einführen des Stützfingers 14 der Vorsprung 36 zunächst ein Stück weit nach radial außen gedrückt. Sobald eine der muldenförmigen Vertiefungen 34 auf Höhe des Vorsprungs 36 angeordnet worden ist, schnappt der Vorsprung 36 in eine der muldenförmigen Vertiefungen 34 hinein. Dadurch kann der Stützfinger 14 am Träger 12 und somit im Aufnahmeschacht 28 verliersicher gehalten werden.

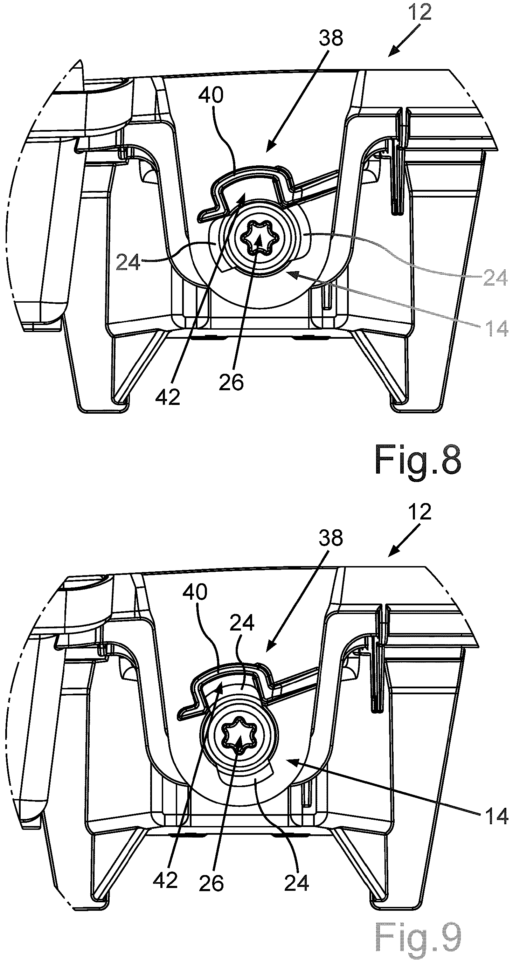

In Fig. 8 ist der Träger 12 in einer Draufsicht im Bereich des Aufnahmeschachts 28 gezeigt. Der Stützfinger 14 ist wiederum in den Aufnahmeschacht 28 eingesetzt. Die Trägervorrichtung 10 weist eine Verdrehsicherung 38 auf, welche vorliegend direkt am Träger 12 ausgeformt ist. Die Verdrehsicherung 38 umfasst einen biegsamen Sicherungsarm 40 mit einer Aussparung 42. Durch Verdrehen des Stützfingers 14 um seine Längsachse von seiner Freigabestellung in die Fixierstellung kann je nach Drehrichtung einer der beiden radialen Vorsprünge 24 zunächst den Sicherungsarm 40 wegbiegen, wobei mit Erreichen der Fixierstellung unter Zurückschnappen des Sicherungsarms 40 einer der beiden radialen Vorsprünge 24 in die Aussparung 42 gelangt.

In Fig. 9 ist der Träger 12 wiederum in der gleichen Draufsicht wie in Fig. 8 gezeigt, wobei der Stützfinger 14 in seine Fixierstellung verdreht worden ist. Der biegsame Sicherungsarm 40 ist wieder zurückgeschnappt, da einer der beiden radialen Vorsprünge 24 gegenüberliegend von der Aussparung 42 des Sicherungsarms 40 angeordnet worden ist. Die Aussparung 42 ist so geformt, dass ein Formschluss zwischen der Aussparung 42 und dem betreffenden radialen Vorsprung 24 hergestellt werden kann. Dadurch kann der Stützfinger 14 in seiner Fixierstellung verdrehgesichert gehalten werden.

Entgegen den Darstellungen in den Figuren ist es auch möglich, dass die Trägervorrichtung 10 noch weitere Aufnahmeschächte 28 und zugehörige Stützfinger 14 aufweist. Insbesondere kann der Träger 12 in Querrichtung des Trägers 12 mehrere der Aufnahmeschächte 28, beispielsweise zwei davon oder auch mehr davon, aufweisen, die jeweils wiederum die Innenverzahnungen 30 aufweisen. Entsprechend der Anzahl der Aufnahmeschächte 28 weist dann die Trägervorrichtung 10 entsprechende viele Stützfinger 14 auf, die in die jeweiligen Aufnahmeschächte 28 in der bereits beschriebenen Weise eingesetzt und darin verdreht werden können.

Durch das Vorsehen mehrerer Stützfinger 14 und zugehöriger Aufnahmeschächte 28 ist es möglich, schwere Komponenten und insbesondere auch schwere Außenverkleidungsteile zuverlässig zu halten und gegenüber anderen Komponenten des Kraftfahrzeugs anzuordnen und zu fixieren. Die Trägervorrichtung 10 kann zu einer Frontend-Baugruppe für ein Fahrzeug gehören, welches neben dem besagten Außenverkleidungsteil beispielsweise noch einen Stoßfänger aufweisen kann, an dem das Abstützteil 18 angeordnet sein kann. Das Abstützteil 18 kann auch beispielsweise integraler Bestandteil des Stoßfängers sein. Zum Montieren der Frontend-Baugruppe wird das Außenverkleidungsteil am Träger 12 der Trägervorrichtung 10 befestigt. Der zumindest eine Stützfinger 14 kann in der bereits beschriebenen Weise unter Zuhilfenahme der Transportsicherung 32 in dem wenigstens einen Aufnahmeschacht 28 angeordnet und verliersicher fixiert angeliefert werden. Der wenigstens eine Stützfinger 14 kann in seiner Freigabestellung angeordnet in den Aufnahmeschacht 28 abgesenkt werden, und zwar so weit, bis dieser stirnseitig in Anlage mit dem Abstützteil 18 gelangt. Anschließend wird der wenigstens eine Stützfinger 14 in seine Fixierstellung verdreht, in Folge dessen keine Relativbewegung mehr zwischen dem Stützfinger 14 und dem Träger 12 möglich ist. Dadurch kann das betreffende Außenverkleidungsteil, welches mittels des Trägers 12 gehalten wird, passgenau beispielswiese zum besagten Stoßfänger oder auch zu anderen Komponenten des Kraftfahrzeugs angeordnet werden und bleiben.

### Bezugszeichenliste

- 10: Trägervorrichtung
- 12: Träger
- 14: Stützfinger
- 16: unteres Längsende des Stützfingers
- 18: Abstützteil
- 20: Außenverzahnung des Stützfingers
- 22: oberes Längsende des Stützfingers
- 24: radiale Vorsprünge des Stützfingers
- 26: Vertiefung
- 28: Aufnahmeschacht des Trägers
- 30: Innenverzahnung des Aufnahmeschachts
- 32: Transportsicherung
- 34: muldenförmige Vertiefungen am Stützfinger
- 36: Vorsprung am Trägerteil
- 38: Verdrehsicherung
- 40: biegsamer Sicherungsarm der Verdrehsicherung
- 42: Aussparung am biegsamen Sicherungsarm

## Patentansprüche

1. Trägervorrichtung (10) für ein Außenverkleidungsteil eines Kraftfahrzeugs, umfassend
- einen Träger (12) zum Aufnehmen des Außenverkleidungsteils, der wenigstens einen in vertikaler Richtung verlaufenden Aufnahmeschacht (28) mit einer Innenverzahnung (30) aufweist;
- wenigstens einen in den Aufnahmeschacht (28) einsetzbaren Stützfinger (14), der an seiner Mantelfläche eine Außenverzahnung (20) und an einem unteren Längsende (16) einen stirnseitigen Abstützbereich zum Abstützen des Stützfingers (14) in vertikaler Richtung auf einem Abstützteil (18) des Kraftfahrzeugs aufweist;
- wobei der Stützfinger (14) relativ zum Aufnahmeschacht (28) um seine Längsachse zwischen einer Freigabestellung und einer Fixierstellung verdrehbar ist;
- wobei in der Freigabestellung die Außenverzahnung (20) und die Innenverzahnung (30) nicht in Eingriff stehen, sodass der Stützfinger (14) in vertikaler Richtung relativ zum Aufnahmeschacht (28) bewegbar ist;
- wobei in der Fixierstellung die Außenverzahnung (20) und die Innenverzahnung (30) in Eingriff stehen, sodass eine Bewegung des Stützfingers (14) in vertikaler Richtung relativ zum Aufnahmeschacht (28) gesperrt wird
- wobei der Träger (12) eine Verdrehsicherung (38) aufweist, die dazu ausgelegt ist, den Stützfinger (14) in der Fixierstellung zu halten,
**dadurch gekennzeichnet, dass**
- die Verdrehsicherung (38) einen biegsamen Sicherungsarm (40) mit einer Aussparung (42) aufweist;
- der Stützfinger (14) wenigstens einen radialen Vorsprung (24) aufweist;
- durch Verdrehen des Stützfingers (14) von der Freigabestellung in die Fixierstellung der radiale Vorsprung (24) zunächst den Sicherungsarm (40) wegbiegt und mit Erreichen der Fixierstellung unter Zurückschnappen des Sicherungsarms (40) in die Aussparung (42) gelangt.

2. Trägervorrichtung (10) nach Anspruch 1,
**dadurch gekennzeichnet, dass**
- die Außenverzahnung (20) des Stützfingers (14) an zwei gegenüberliegenden Längsseiten ausgebildet und durch zwei gegenüberliegende Längsseiten ohne Außenverzahnung (20) unterbrochen ist;
- die Innenverzahnung (30) im Aufnahmeschacht (28) des Trägers (12) an zwei gegenüberliegenden Längsseiten ausgebildet und durch zwei gegenüberliegende Längsseiten ohne Innenverzahnung (30) unterbrochen ist.

3. Trägervorrichtung (10) nach Anspruch 1 oder 2,
**dadurch gekennzeichnet, dass**
die Außenverzahnung (20) und die Innenverzahnung (30) jeweils als Schrägverzahnung ausgebildet sind, sodass beim aneinander Abgleiten der Außenverzahnung an der Innenverzahnung (30) der Stützfinger (14) in vertikaler Richtung bewegt wird.

4. Trägervorrichtung (10) nach einem der vorhergehenden Ansprüche,
**dadurch gekennzeichnet, dass**
der Stützfinger (14) zwei der radialen Vorsprünge (24) aufweist, die an gegenüberliegenden Seiten des Stützfingers (14) angeordnet sind.

5. Trägervorrichtung (10) nach einem der vorhergehenden Ansprüche,
**dadurch gekennzeichnet, dass**
die Trägervorrichtung (10) eine Transportsicherung (32) aufweist, welche dazu ausgelegt ist, den in den Aufnahmeschacht (28) eingesetzten Stützfinger (14) am Träger (12) zu fixieren.

6. Trägervorrichtung (10) nach Anspruch 5,
**dadurch gekennzeichnet, dass**
die Transportsicherung (32) eine Schnappverbindung aufweist, welche dazu ausgelegt ist, den in den Aufnahmeschacht (28) eingesetzten Stützfinger (14) am Träger (12) zu fixieren.

7. Trägervorrichtung (10) nach einem der vorhergehenden Ansprüche,
**dadurch gekennzeichnet, dass**
- der Träger (12) einen weiteren in vertikaler Richtung verlaufenden Aufnahmeschacht (28) mit einer Innenverzahnung (30) und einen weiteren in diesen Aufnahmeschacht (28) einsetzbaren Stützfinger (14) aufweist, der an seiner Mantelfläche eine Außenverzahnung (20) und an einem unteren Längsende (16) einen stirnseitigen Abstützbereich zum Abstützen des Stützfingers (14) in vertikaler Richtung auf dem Abstützteil (18) oder einem weiteren Abstützteil des Kraftfahrzeugs aufweist;
- der weitere Stützfinger relativ zum weiteren Aufnahmeschacht (28) um seine Längsachse zwischen einer Freigabestellung und einer Fixierstellung verdrehbar ist;
- in der Freigabestellung die Außenverzahnung (20) und die Innenverzahnung (30) nicht in Eingriff stehen, sodass der weitere Stützfinger (14) in vertikaler Richtung relativ zum weiteren Aufnahmeschacht (28) bewegbar ist;
- in der Fixierstellung die Außenverzahnung (20) und die Innenverzahnung (30) in Eingriff stehen, sodass eine Bewegung des weiteren Stützfingers (14) in vertikaler Richtung relativ zum weiteren Aufnahmeschacht (28) gesperrt wird.

8. Frontend-Baugruppe für ein Kraftfahrzeug, umfassend
- ein Außenverkleidungsteil;
- einen Stoßfänger, an dem ein Abstützteil (18) angeordnet ist;
- eine Trägervorrichtung (10) nach einem der vorhergehenden Ansprüche, deren Träger dazu ausgelegt ist, das Außenverkleidungsteil aufzunehmen, und deren Stützfinger (14) dazu ausgelegt ist, sich mit seinem stirnseitigen Abstützbereich in vertikaler Richtung auf dem Abstützteil (18) abzustützen.

## Claims

1. Support device (10) for an external cladding part of a motor vehicle, comprising
- a support (12) for receiving the external cladding part, which comprises at least one receiving shaft (28) which extends in the vertical direction and has an inner toothing (30);
- at least one support finger (14) which can be inserted into the receiving shaft (28) and which comprises an external toothing (20) on the lateral surface thereof and an end-face support region at a lower longitudinal end (16) for supporting the support finger (14) in the vertical direction on a support part (18) of the motor vehicle;
- wherein the support finger (14) is rotatable relative to the receiving shaft (28), about the longitudinal axis thereof, between a release position and a fixing position;
- wherein, in the release position, the external toothing (20) and the internal toothing (30) are not in engagement, such that the support finger (14) is movable in the vertical direction relative to the receiving shaft (28);
- wherein in the fixing position, the external toothing (20) and the internal toothing (30) are in engagement, such that a movement of the support finger (14) in the vertical direction relative to the receiving shaft (28) is blocked,
- wherein the support (12) comprises an anti-rotation element (38) which is designed to hold the support finger (14) in the fixing position,
**characterised in that**
- the anti-rotation element (38) comprises a flexible securing arm (40) having a recess (42);
- the support finger (14) comprises at least one radial protrusion (24);
- by rotating the support finger (14) from the release position into the fixing position, the radial protrusion (24) first bends the securing arm (40) away and, upon reaching the fixing position, enters the recess (42), snapping back the securing arm (40).

2. Support device (10) according to claim 1,
**characterised in that**
- the external toothing (20) of the support finger (14) is formed on two opposing longitudinal sides and is interrupted by two opposing longitudinal sides without external toothing (20);
- the internal toothing (30) in the receiving shaft (28) of the support (12) is formed on two opposing longitudinal sides and is interrupted by two opposing longitudinal sides without internal toothing (30).

3. Support device (10) according to either claim 1 or claim 2,
**characterised in that**
the external toothing (20) and the internal toothing (30) are each formed as a helical toothing, such that when the external toothing and the internal toothing (30) slide on one another the support finger (14) is moved in the vertical direction.

4. Support device (10) according to any of the preceding claims,
**characterised in that**
the support finger (14) comprises two of the radial protrusions (24) which are arranged on opposing sides of the support finger (14).

5. Support device (10) according to any of the preceding claims,
**characterised in that**
the support device (10) comprises a transport securing means (32) which is designed to fix the support finger (14), inserted into the receiving shaft (28), on the support (12).

6. Support device (10) according to claim 5,
**characterised in that**
the transport securing means (32) comprises a snap connection which is designed to fix the support finger (14), inserted into the receiving shaft (28), on the support (12).

7. Support device (10) according to any of the preceding claims,
**characterised in that**
- the support (12) comprises a further receiving shaft extending in the vertical direction and comprising an internal toothing (30), and a further support finger (14) which can be inserted into said receiving shaft (28) and which comprises an external toothing (20) on the lateral surface thereof and an end-face support region at a lower longitudinal end (16) for supporting the support finger (14) in the vertical direction on the support part (18) or a further support part of the motor vehicle;
- the further support finger is rotatable relative to the further receiving shaft (28), about the longitudinal axis thereof, between a release position and a fixing position;
- in the release position, the external toothing (20) and the internal toothing (30) are not in engagement, such that the further support finger (14) is movable in the vertical direction relative to the further receiving shaft (28);
- in the fixing position, the external toothing (20) and the internal toothing (30) are in engagement, such that a movement of the further support finger (14) in the vertical direction relative to the further receiving shaft (28) is blocked.

8. Front end assembly for a motor vehicle, comprising
- an external cladding part;
- a bumper, on which a support part (18) is arranged;
- a support device (10) according to any of the preceding claims, the support of which is designed to receive the external cladding part, and the support finger (14) of which is designed to be supported, by the end-face support region thereof, on the support part (18), in the vertical direction.

## Revendications

1. Dispositif de support (10) pour une partie d'habillage extérieur d'un véhicule à moteur, comprenant
- un support (12) pour recevoir la partie d'habillage extérieur, qui présente au moins un puits de réception (28) s'étendant dans une direction verticale avec une denture intérieure (30) ;
- au moins un doigt d'appui (14) pouvant être inséré dans le puits de réception (28), qui présente, sur sa surface enveloppante, une denture extérieure (20) et, sur une extrémité longitudinale inférieure (16), une zone de soutien côté frontal pour soutenir le doigt d'appui (14) dans une direction verticale sur une partie de soutien (18) du véhicule à moteur ;
- dans lequel le doigt d'appui (14) peut être tourné par rapport au puits de réception (28) autour de son axe longitudinal entre une position de déblocage et une position de blocage ;
- dans lequel dans la position de déblocage, la denture extérieure (20) et la denture intérieure (30) ne sont pas en prise si bien que le doigt d'appui (14) peut être déplacé par rapport au puits de réception (28) dans une direction verticale ;
- dans lequel dans la position de blocage, la denture extérieure (20) et la denture intérieure (30) sont en prise si bien qu'un déplacement du doigt d'appui (14) dans une direction verticale par rapport au puits de réception (28) est arrêté,
- dans lequel le support (12) présente un système de blocage anti-rotation (38), qui est conçu pour maintenir le doigt d'appui (14) dans la position de blocage,
**caractérisé en ce que**
- le système de blocage anti-rotation (38) présente un bras de blocage (40) flexible avec un évidement (42) ;
- le doigt d'appui (14) présente au moins une partie faisant saillie radiale (24) ;
- du fait de la rotation du doigt d'appui (14) depuis la position de déblocage dans la position de blocage, la partie faisant saillie radiale (24) plie dans un premier temps le bras de blocage (40) et parvient dans l'évidement (42) moyennant le recul du bras de blocage (40) tout en atteignant la position de blocage.

2. Dispositif de support (10) selon la revendication 1,
**caractérisé en ce que**
- la denture extérieure (20) du doigt d'appui (14) est réalisée sur deux côtés longitudinaux opposés et est interrompue par deux côtés longitudinaux opposés sans denture extérieure (20) ;
- la denture intérieure (30) est réalisée dans le puits de réception (28) du support (12) sur deux côtés longitudinaux opposés et est interrompue par deux côtés longitudinaux opposés sans denture intérieure (30).

3. Dispositif de support (10) selon la revendication 1 ou 2,
**caractérisé en ce que**
la denture extérieure (20) et la denture intérieure (30) sont réalisées respectivement en tant que denture oblique, si bien que lors du glissement de la denture extérieure sur la denture intérieure (30), le doigt d'appui (14) est déplacé dans la direction verticale.

4. Dispositif de support (10) selon l'une quelconque des revendications précédentes,
**caractérisé en ce que**
le doigt d'appui (14) présente deux des parties faisant saillie radiales (24), qui sont disposées sur des côtés opposés du doigt d'appui (14).

5. Dispositif de support (10) selon l'une quelconque des revendications précédentes,
**caractérisé en ce que**
le dispositif de support (10) présente un système de blocage de transport (32), lequel est conçu pour bloquer le doigt d'appui (14) inséré dans le puits de réception (28) sur le support (12).

6. Dispositif de support (10) selon la revendication 5,
**caractérisé en ce que**
le système de blocage de transport (32) présente un liaison à déclic, laquelle est conçue pour bloquer le doigt d'appui (14) inséré dans le puits de réception (28) sur le support (12).

7. Dispositif de support (10) selon l'une quelconque des revendications précédentes,
**caractérisé en ce que**
- le support (12) présente un autre puits de réception (28) s'étendant dans la direction verticale avec une denture intérieure (30) et un autre doigt d'appui (14) pouvant être inséré dans ledit puits de réception (28), qui présente, sur sa surface enveloppante, une denture extérieure (20) et, sur une extrémité longitudinale inférieure (16), une zone de soutien côté frontal pour soutenir le doigt d'appui (14) dans la direction verticale sur la partie de soutien (18) ou une autre partie de soutien du véhicule à moteur ;
- l'autre doigt d'appui peut être tourné par rapport à l'autre puits de réception (28) autour de son axe longitudinal entre une position de déblocage et une position de blocage ;
- dans la position de déblocage, la denture extérieure (20) et la denture intérieure (30) ne sont pas en prise si bien que l'autre doigt d'appui (14) peut être déplacé dans la direction verticale par rapport à l'autre puits de réception (28) ;
- dans la position de blocage, la denture extérieure (20) et la denture intérieure (30) sont en prise si bien qu'un déplacement de l'autre doigt d'appui (14) dans la direction verticale par rapport à l'autre puits de réception (28) est arrêté.

8. Module d'extrémité avant pour un véhicule à moteur, comprenant :
- une partie d'habillage extérieur ;
- un pare-chocs, sur lequel une partie de soutien (18) est disposée ;
- un dispositif de support (10) selon l'une quelconque des revendications précédentes, dont le support est conçu pour recevoir la partie d'habillage extérieur, et dont le doigt d'appui (14) est conçu pour être soutenu, par sa zone de soutien côté frontal, sur la partie de soutien (18) dans la direction verticale.
